(19) **Europäisches Patentamt**

**European Patent Office**

**Office européen des brevets**

(11) Veröffentlichungsnummer: **0 574 798 B1**

(12) # EUROPÄISCHE PATENTSCHRIFT

(45) Veröffentlichungstag der Patentschrift: **06.09.95**

(21) Anmeldenummer: **93109166.4**

(22) Anmeldetag: **08.06.93**

(51) Int. Cl.6: **F16G 15/06**, F16G 17/00, A01G 23/00

---

(54) **Kette, wie Rücke-, Choker- oder Anschlagkette.**

---

(30) Priorität: **13.06.92 DE 9207973 U**

(43) Veröffentlichungstag der Anmeldung:
**22.12.93 Patentblatt 93/51**

(45) Bekanntmachung des Hinweises auf die
Patenterteilung:
**06.09.95 Patentblatt 95/36**

(84) Benannte Vertragsstaaten:
**AT CH DE IT LI**

(56) Entgegenhaltungen:
DE-A- 2 023 866     DE-U- 9 207 973
FR-A- 1 057 508     GB-A- 14 280
GB-A- 1 192 081     US-A- 3 906 716
US-A- 4 076 430

(73) Patentinhaber: **EISEN- UND DRAHTWERK ER-
LAU AKTIENGESELLSCHAFT**
**Erlau 16**
**D-73431 Aalen (DE)**

(72) Erfinder: **Müller, Anton**
**Brandweg 9**
**D-7080 Aalen-Unterkochen (DE)**

(74) Vertreter: **Jackisch-Kohl, Anna-Katharina**
**Patentanwälte**
**Jackisch-Kohl & Kohl**
**Stuttgarter Strasse 115**
**D-70469 Stuttgart (DE)**

---

EP 0 574 798 B1

## Beschreibung

Die Erfindung betrifft eine Kette nach dem Oberbegriff des Anspruches 1.

Choker- und Rückeketten sind Forstketten, die es in verschiedenen Längen und Kettenstärken gibt. Chokerketten werden hauptsächlich bei der Bringung bzw. beim Transport von Schwachholz benötigt, während Rückeketten für Starkholz eingesetzt werden. Choker- und Rückeketten haben Haken- und Verbindungsglieder, die an den Enden des Kettenstranges, der vorbestimmte Länge hat, vorgesehen sind. Bei diesen Ketten sind sämtliche Verbindungsstellen zwischen dem Kettenstrang und den Haken- bzw. Verbindungsgliedern durch eingeschweißte Übergangsglieder gebildet. Diese Ketten sind konstruktiv aufwendig in der Herstellung, da hierbei viel Handarbeit sowie Arbeits- und Zeitaufwand erforderlich sind. Ferner entstehen bei diesen Ketten Lagerhaltungskosten, da sie in bestimmten Baugrößen festgelegt sein müssen.

Es sind auch Choker- und Rückeketten bekannt, die im Baukastensystem hergestellt werden können. Bei diesen Ketten haben die Haken- und Verbindungsglieder einen Gabelkopf, an dem der Kettenstrang unmittelbar mit einem Bolzen befestigt wird, der mit einem oder zwei Sicherungsstiften im Gabelkopf gesichert ist. Die Ketten können zwar vormontiert werden, sie sind jedoch wegen des Bolzens und der Sicherungsstifte sowie der Bohrungen für die Sicherungsstifte relativ aufwendig und teuer in der Herstellung und auch schwierig zu montieren.

Der Erfindung liegt die Aufgabe zugrunde, eine Kette dieser Art so auszubilden, daß sie aus nur wenigen Bauteilen einfach und kostengünstig hergestellt und einfach montiert werden kann.

Diese Aufgabe wird bei einer Kette der gattungsbildenden Art erfindungsgemäß mit den kennzeichnenden Merkmalen des Anspruches 1 gelöst.

Infolge der erfindungsgemäßen Ausbildung ist für die Verbundspannhülse eine zusätzliche Sicherung nicht notwendig, so daß die hierfür notwendigen Sicherungsstifte und Bohrungen entfallen. Die Kette hat dadurch einen einfachen Aufbau und kann aus nur wenigen Bauteilen kostengünstig hergestellt werden. Die Verbundspannhülse sitzt sicher im Gabelkopf und hat, da sie aus zwei ineinandergesteckten Spannhülsen besteht, eine lange Lebensdauer. Die Verbundspannhülse sichert sich infolge ihrer elastischen Verspannung im Gabelkopf selbst und gewährleistet dabei eine hohe Sicherheit gegen unbeabsichtigtes Lösen.

Weitere Merkmale der Erfindung ergeben sich aus den weiteren Ansprüchen, der Beschreibung und den Zeichnungen.

Die Erfindung wird nachstehend anhand eines in den Zeichnungen dargestellten Ausführungsbeispieles näher beschrieben. Es zeigt:

Fig. 1     in Seitenansicht eine erfindungsgemäße Rückekette mit einem Kettenstrang, an dessen einem Ende ein Schlinghaken und an dessen anderem Ende ein Kupplungsschäkel mit einem Einhängeglied, befestigt sind,

Fig. 2     in vergrößerter Darstellung und im Längsschnitt einen Teil des Schlinghakens gemäß Fig. 1 mit eingehängtem Kettenglied,

Fig. 3     in vergrößerter und in explosiver Darstellung den Kupplungsschäkel gemäß Fig. 1 mit drei Kettengliedern des Kettenstranges der Kette nach Fig. 1.

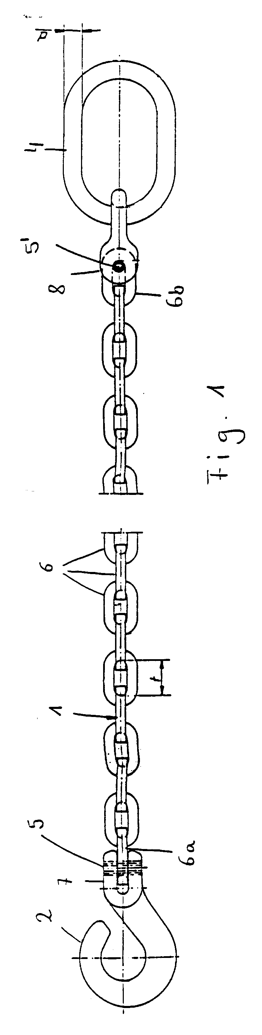

Die in Fig. 1 dargestellte Rückekette ist eine Forstkette, die zur Bringung bzw. den Transport von Starkholz verwendet wird. Sie besteht in bekannter Weise im wesentlichen aus einem Kettenstrang, an dessen Enden ein Haken 2 und ein Kupplungsschäkel 3 befestigt sind. Der Kupplungsschäkel 3 ist mit einem Anhängeglied 4 verbunden, das um ein Mehrfaches größer ist als die Ringglieder 6 des Kettenstranges 1.

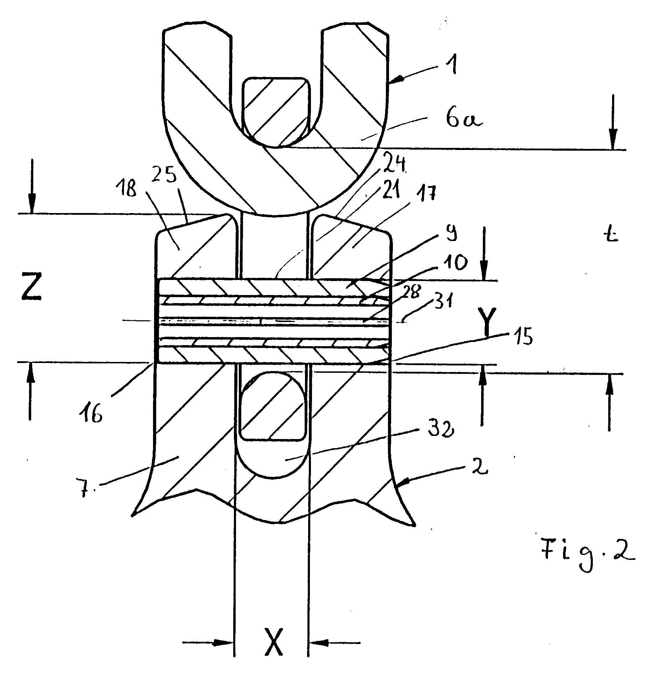

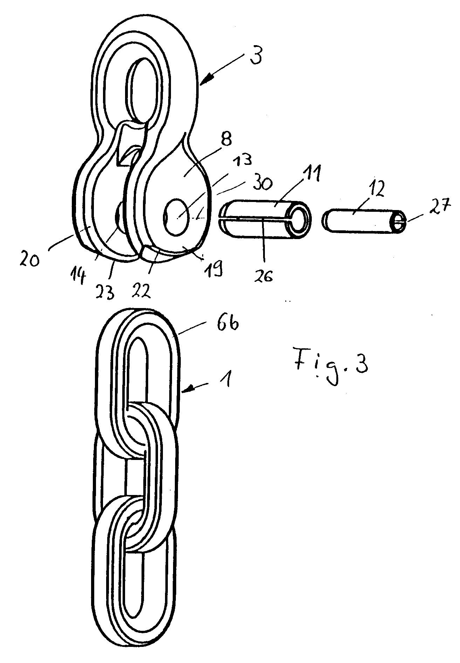

Der Haken 2 und der Schäkel 3 sind über jeweils ein Sicherungsglied 5, 5' mit den anschließenden Endgliedern 6a, 6b des Kettenstranges 1 verbunden. Die Sicherungsglieder 5, 5' liegen, wie insbesondere die Fig. 2 und 3 zeigen, in miteinander fluchtenden Öffnungen 15, 16 und 13, 14 eines Gabelkopfes 7, 8 des Hakens 2 und des Schäkels 3.

Die gleich ausgebildeten Sicherungsglieder 5, 5' sind als Verbundspannhülsen ausgebildet. Sie bestehen aus jeweils zwei aufeinander sitzenden und gegeneinander verspannten Spannhülsen 9 und 10 bzw. 11 und 12, die jeweils einen über die ganze Länge der Hülsen verlaufenden Längsschlitz 26, 27, 28 aufweisen (Fig. 2 und 3). Die Längsschlitze 26 bis 28 der Spannhülsen 9, 10 bzw. 11, 12 sind gegeneinander versetzt angeordnet, so daß sie nicht übereinanderliegen. Die äußere Spannhülse 9, 11 hat größere Wandstärke als die innere Spannhülse 10, 12. Die Spannhülsen werden werkseitig bereits fest miteinander verbunden, so daß sie z. B. vor Ort durch die miteinander fluchtenden Gabelkopföffnungen 13, 14 und 15, 16 des Hakens 2 bzw. des Schäkels 3 eingeschlagen werden können. Die Spannhülsen 9 bis 12 bestehen aus Federstahl. Der Außendurchmesser der inneren Spannhülse 10, 12 ist geringfügig größer als der Innendurchmesser der äußeren Spannhülse 9, 11, so daß die äußere Spannhülse beim Einsetzen der inneren Spannhülse elastisch aufgeweitet und/oder die innere Spannhülse elastisch zusammengedrückt wird. Die ineinander gesetzten Spannhülsen liegen dadurch unter elastischer Vorspannung aneinander, so daß sie sicher und fest miteinander verbunden sind. Der Außendurchmesser der äußeren Spannhülse 9, 11 ist größer als der Durchmesser der Gabelkopföffnungen 13 bis 16. Darum wird die Verbundspannhülse 5, 5' beim Einschlagen in die Gabelkopföffnungen 13 bis 16 elastisch zusammengedrückt, so daß sie mit großer Vorspannung an den Öffnungswandungen anliegt und dadurch sicher im jeweiligen Gabelkopf 7, 8 sitzt. Infolge dieser hohen Verspannung sind zusätzliche Sicherungsglieder für die Verbundspannhülsen 5, 5' nicht erforderlich. Damit entfallen die Herstellung von für solche Sicherungsglieder notwendigen Bohrungen in den Schenkeln 17, 18 bzw. 19, 20 der Gabelköpfe 7, 8 und die Montage solcher Sicherungsglieder.

Da die Verbundspannhülse 5, 5' aus den beiden ineinandergesetzten und gegeneinander verspannten Spannhülsen 13, 14 und 15, 16 besteht, hat sie eine sehr hohe Festigkeit. Die Spannhülsen 9 bis 12 zeichnen sich ferner durch eine hohe Oberflächenhärte und eine hohe Bruchfestigkeit aus. Die Verbundspannhülsen 5, 5' haben außerdem eine sehr hohe Verschleißfestigkeit.

Ein weiterer Vorteil der Verbundspannhülsen 5, 5' besteht darin, daß bei Verschleiß der äußeren Spannhülsen 9, 11 im Eingriffsbereich 21 des Kettengliedes (Fig. 2) der übrige Teil der Spannhülsen 9, 11 und die innere Spannhülse 10, 12 als Verschleißteil verbleiben, so daß dadurch die Einsatzdauer der Verbundspannhülse wesentlich erhöht wird.

Die Endglieder 6a und 6b des Kettenstranges 1 lassen sich mit dem Haken 2 und dem Schäkel 3 über die Verbundspannhülsen 5, 5' sehr einfach verbinden. Der Kunde kann beispielsweise den Kettenstrang 1 in Meterware kaufen und bereithalten und bei Bedarf den Haken 2 und/oder den Schäkel 3 mit den Verbundspannhülsen 5, 5' montieren. Es müssen keine Kettenstränge mit vorgegebener Länge auf Lager gehalten werden.

Die Gabelköpfe 7, 8 des Hakens 2 und des Schäkels 3 bzw. auch anderer Verbindungsglieder, wie Endbügel, Seilhaken, Schlinghaken, Verkürzungslaschen usw., sind so ausgebildet, daß für sie nur eine Größe von Verbundspannhülsen 5, 5' benötigt wird. Dadurch müssen nicht verschieden lange und/oder dicke Verbundspannhülsen auf Lager gehalten werden. Bei der beschriebenen Kette ist wesentlich, daß der Haken 2 und der Schäkel 3 so ausgebildet sind, daß sie nur mit Kettengliedern 6 einer vorgegebenen Festigkeit verbunden werden können, die vorzugsweise aus Vierkantmaterial hergestellt sind (Fig. 3). Vorzugsweise können sie nur mit Kettengliedern mit einer Teilung t von 3,4 d verbunden werden, wobei d der Durchmesser des Strangmateriales ist, aus dem die Kettenglieder 6 gebildet sind. Beträgt beispielsweise der Querschnittsdurchmesser d eines Kettengliedes 10 mm, dann hat es eine Teilung t von 34 mm. Die Kettenglieder 6 müssen nicht zwingend aus Vierkantmaterial bestehen, sie können auch aus Rundmaterial hergestellt sein.

Um sicherzustellen, daß mit dem Haken 2 und dem Schäkel 3 jeweils nur ein Kettenstrang mit einer entsprechenden Kettengliedstärke und damit ausreichender Tragfähigkeit verbunden werden kann, können die Verbundspannhülsen 5, 5' nur dann in die Bohrungen 13, 14 und 15, 16 eingeschlagen werden, wenn ein bestimmtes Teilungsmaß t, vorzugsweise von 3,4 d, vorliegt. Kettenglieder mit einer kleineren Teilung lassen sich nicht montieren. Die Abmessungen der Gabelköpfe 8, 9 und der Durchmesser der Verbundspannhülsen 5, 5' sind so gewählt, daß nur ein Kettenstrang mit Kettengliedern der zutreffenden Kettenstärke und damit der vorgesehenen Festigkeit montiert werden können.

Um das verwechslungsfreie Anschließen des Kettenstranges 1 an den Haken 2 und an den Schäkel 3 sicherzustellen bzw. zu vereinfachen, sind die Gabelköpfe 8, 9 besonders gestaltet. Die Öffnungen 13 bis 16 zur Aufnahme der Verbundspannhülsen 5, 5' sind so in den beiden Schenkeln 17, 18 und 19, 20 des Gabelkopfes 8, 9 vorgesehen, daß der Abstand zu den Stirnseiten 22, 23 und 24, 25 des jeweiligen Gabelkopfschenkels, bezogen auf die Achse 30, 31 der Öffnungen 13, 14 und 15, 16 der Gabelkopfschenkel, stets gleich ist. Wie die Fig. 1 und 2 zeigen, sind die Stirnseiten um die Achsen 30, 31 der Öffnungen 13 bis 16 gekrümmt ausgebildet. Dies hat den Vorteil, daß das eingehängte Kettenglied 6a, 6b beim Verschwenken relativ zum Gabelkopf 8, 9 einwandfrei mit geringem Abstand zu den Stirnseiten 22 bis 25 der Gabelkopfschenkel 17, 18 und 19, 20 verschwenkt werden kann. Ist die Kettengliedteilung zu gering und gelingt es dem Kunden doch, die Verbundspannhülse 5, 5', wenn auch nur unter großen Mühen, einzuschlagen, dann läßt sich das Kettenglied 6a, 6b infolge der beschriebenen Anordnung der Öffnungen 13, 14 und 15, 16 in den Gabelkopfschenkeln 17, 18 und 19, 20 nicht mehr verschwenken. Die Kettenglieder 6a, 6b bleiben an der Stirnseite 22, 23 und 24, 25 des Gabelkopfes 8, 9 hängen. Damit erhält der Benutzer einer derartigen Kette sofort den Hinweis, daß er nicht zusammengehörige Teile versehentlich miteinander verbunden hat.

Damit nicht zu dünne Kettenglieder an den Haken 2 bzw. an den Schäkel 3 angeschlossen werden können, sind die Maße z und y wesentlich. Mit dem Maß z ist der Abstand der Stirnseite 22, 23 bzw. 24, 25 der Gabelkopfschenkel 17, 18 bzw. 19, 20 von dem von der Stirnseite abgewandten Wandabschnitt der Öffnungen 13, 14 bzw. 15, 16 bezeichnet. Das Maß y ist der Durchmesser der Öffnungen 13 bis 16. Ist das Kettenglied zu dünn, dann hat es auch eine kleinere Teilung (wegen der Beziehung t = n x d), so daß das Kettenglied nicht mehr über die Verbundspannhülse 5, 5' mit dem Haken 2 bzw. dem Schäkel 3 verbunden werden kann. Infolge der kleineren Teilung würde das Kettenglied 6a, 6b in diesem Falle, selbst wenn die Verbundspannhülse 5, 5' mit Gewalt eingeschlagen werden könnte, an der Stirnseite der Gabelkopfschenkel in der beschriebenen Weise anliegen und könnte nicht mehr oder nur mit großer Mühe gegenüber dem Haken 2 bzw. dem Schäkel 3 verschwenkt werden. Durch den Durchmesser y der Öffnungen 13 bis 16 ist sichergestellt, daß der Abstand zwischen den Stirnseiten 22 bis 25 und dem von ihnen abgewandten Rand der Öffnungen so groß ist, daß nur ein Kettenglied mit der notwendigen Teilung t eingehängt werden kann. Durch die Breite des Gabelkopfschlitzes 32 (Fig. 2) ist gewährleistet, daß nicht zu dicke Kettenglieder eingehängt werden können. Diese Breite ist nur wenig größer als die in Richtung der Achse der Kettengliedöffnung gemessene Querschnittsdicke des Kettengliedes.

Durch die beschriebenen mäßlichen Abmessungen ist sichergestellt, daß nur die festigkeitsmäßig zugehörigen Bauteile miteinander verbunden werden können.

Die beschriebene Kettenausbildung bzw. die Verwendung der Verbundspannhülsen 5, 5' als Sicherungsglieder für die Haken- und Verbindungsglieder eignet sich auch für andere Forstketten, wie Chokerketten, aber auch für Anschlagketten mit unterschiedlichen Längen und Kettenstärken.

Bei der bevorzugten Teilung von 3,4 d ergibt sich eine kurzgliedrige Kette. Sie hat beim Einsatz als Rückekette oder Chokerkette den Vorteil, daß sie einen guten sog. Würgeeffekt hat. Dies ist darauf zurückzuführen, daß infolge der kurzgliedrigen Kette pro Kettenlänge eine entsprechend große Zahl von Kettengliedern am Stamm angreift, so daß eine hohe Griffigkeit gewährleistet ist. Bei Ketten mit längeren Kettengliedern wäre dieser Griffigkeitseffekt wegen der geringen Zahl an Kettengliedern pro Länge wesentlich geringer, da die langen Kettenglieder in bezug auf ihre Länge, nur über ein verhältnismäßig kurzes Stück am Stamm anliegen, wodurch der geringe Würgegriff auftritt. Kurze Kettenglieder hingegen liegen, bezogen auf ihre Länge, über ein großes Maß am Stamm an und erzeugen dadurch die gewünschte hohe Griffigkeit. Haben die Kettenglieder zudem eckigen Drahtquerschnitt, wird die Griffigkeit weiter erhöht.

## Patentansprüche

1. Kette, wie Rücke-, Choker- oder Anschlagkette mit einem Kettenstrang (1), an dem mindestens ein Haken- und/oder Verbindungsglied (2, 4) befestigt sind, die jeweils einen Gabelkopf (7, 8) mit einem Einhängeschlitz für Kettenglieder und ein im Gabelkopf gelagertes und den Einhängeschlitz durchquerendes Einhängeelement aufweisen,
dadurch gekennzeichnet, daß das Einhängeelement eine Verbundspannhülse (5, 5') ist, die aus zwei ineinandergesteckten Spannhülsen (9, 10; 11, 12), besteht, die unter elastischer Vorspannung aneinanderliegen und mit elastischer Vorspannung im Gabelkopf (7, 8) gehalten sind.

2. Kette nach Anspruch 1,
dadurch gekennzeichnet, daß die Schlitze (26 bis 28) der Spannhülsen (9, 10; 11, 12) der Verbundspannhülse (5, 5') zueinander versetzt liegen.

3. Kette nach Anspruch 1 oder 2,
dadurch gekennzeichnet, daß die Spannhülsen (9, 10; 11, 12) gleich lang sind.

4. Kette nach einem der Ansprüche 1 bis 3,
dadurch gekennzeichnet, daß die äußere Spannhülse (9, 11) größere Wandstärke hat als die innere Spannhülse (10, 12).

5. Kette nach einem der Ansprüche 1 bis 4,
dadurch gekennzeichnet, daß der Gabelkopf (7, 8) des Haken- und/oder Verbindungsgliedes (2, 3) Schenkel (17 bis 20) hat, deren Stirnseiten (22 bis 25) um die Achse (30, 31) der Aufnahmen (13 bis 16) der Schenkel (17 bis 20) für die Verbundspannhülse (5, 5') gekrümmt verlaufen.

6. Kette nach einem der Ansprüche 1 bis 5,
dadurch gekennzeichnet, daß die Kettenglieder (6, 6a, 6b) des Kettenstranges (1) eine Teilung (t) von 3,4 d haben.

7. Kette nach einem der Ansprüche 1 bis 6,
dadurch gekennzeichnet, daß die Kettenglieder (6, 6a, 6b) eckigen, vorzugsweise viereckigen Drahtquerschnitt haben.

8. Kette nach einem der Ansprüche 1 bis 7,
dadurch gekennzeichnet, daß die Spannhülsen (9 bis 12) aus Federstahl bestehen.

## Claims

1. A chain, such as a hauling chain, choker chain or sling chain, having a chain strand (1) to which there is secured at least one hook member and/or connecting member (2, 4) which in each case has both a fork head (7, 8) with a attachment channel for chain links and an attachment element which is mounted in the fork head and traverses the attachment channel, characterised in that the attachment element is a composite clamping sleeve (5, 5') composed of two clamping sleeves (9, 10; 11, 12) which are fitted into one another, lie against one another under resilient prestressing and are held in the fork head (7, 8) by means of resilient prestressing.

2. A chain in accordance with Claim 1, characterised in that the slits (26 to 28) of the clamping sleeves (9, 10; 11, 12) of the composite clamping sleeve (5, 5') are out-of-line in relation to one another.

3. A chain in accordance with Claim 1 or 2, characterised in that the clamping sleeves (9, 10; 11, 12) are the same length.

4. A chain in accordance with any one of Claims 1 to 3, characterised in that the outer clamping sleeve (9, 11) has a greater wall thickness than the inner clamping sleeve (10, 12).

5. A chain in accordance with any one of Claims 1 to 4, characterised in that the fork head (7, 8) of the hook member and/or connecting member (2, 3) has legs (17 to 20) whose front ends (22 to 25) run in a curved manner around the axis (30, 31) of the receivers (13 to 16) of the legs (17 to 20) for the composite clamping sleeve (5, 5').

6. A chain in accordance with any one of Claims 1 to 5, characterised in that the chain links (6, 6a, 6b) of the chain strand (1) have a pitch (p) of 3.4 d.

7. A chain in accordance with any one of Claims 1 to 6, characterised in that the chain links (6, 6a, 6b) have a polygonal, preferably quadrilateral, wire cross-section.

8. A chain in accordance with any one of Claims 1 to 7, characterised in that the clamping sleeves (9 to 12) are composed of spring steel.

**Revendications**

1. Chaîne, par exemple de traction, d'étrangleur ou d'élinguage, comprenant un brin de chaîne (1) auquel sont fixés au moins un organe formant crochet et/ou un organe de liaison (2, 4) qui présentent chacun une tête (7, 8) en forme de fourche munie d'une fente d'accrochage pour maillons de chaîne, et un élément d'accrochage monté dans la tête en forme de fourche et qui traverse la fente d'accrochage, caractérisée en ce que l'élément d'accrochage est une douille de serrage composite (5, 5') qui est composée de deux douilles de serrage (9, 10 ; 11, 12) emmanchées l'une dans l'autre, qui sont en appui l'une contre l'autre sous précontrainte élastique et qui sont maintenues dans la tête (7, 8) en forme de fourche avec une précontrainte élastique.

2. Chaîne selon la revendication 1, caractérisée en ce que les fentes (26 à 28) des douilles de serrage (9, 10 ; 11, 12) de la douille de serrage composite (5, 5') sont décalées l'une par rapport à l'autre.

3. Chaîne selon la revendication 1 ou 2, caractérisée en ce que les douilles de serrage (9, 10 ; 11, 12) sont de même longueur.

4. Chaîne selon une des revendications 1 à 3, caractérisée en ce que la douille de serrage extérieure (9, 11) a une plus grande épaisseur de paroi que la douille de serrage intérieure (10, 12).

5. Chaîne selon une des revendications 1 à 4, caractérisée en ce que la tête (7, 8) en forme de fourche de l'organe formant crochet et/ou de l'organe de liaison (2, 3) possède des branches (17 à 20) dont les côtés frontaux (22 à 25) ont une courbure autour de l'axe (30, 31) des logements (13 à 16) des branches (17 à 20) recevant la douille composite (5, 5').

6. Chaîne selon une des revendications 1 à 5, caractérisée en ce que les maillons (6, 6a, 6b) du brin de chaîne (1) ont un pas (t) de 3,4 d.

7. Chaîne selon une des revendications 1 à 6, caractérisée en ce que les maillons de chaîne (6, 6a, 6b) ont une section de fil polygonale, de préférence quadrangulaire.

8. Chaîne selon une des revendications 1 à 7, caractérisée en ce que les douilles de serrage (9 à 12) sont en acier à ressorts.

Fig. 1

Fig.2

Fig. 3